# DEMANDE DE BREVET EUROPEEN

(11) **EP 4 550 160 A1**
(43) Date de publication de la demande: **07.05.2025**
(21) Numéro de dépôt: 24207195.9
(22) Date de dépôt: 17.10.2024
(51) Int. Cl.: G06F 13/42

(54) **IDENTIFICATION DE PROCESSEURS**

(30) Priorité: 03.11.2023 FR 2311953
(71) Demandeur: STMicroelectronics International N.V., 1228 Plan-les-Ouates, Geneva (CH)
(72) Inventeur: PIJOURLET, Philippe, 06370 MOUANS-SARTOUX (FR); DUFOUR, Brice, 06800 CAGNES SUR MER (FR)
(74) Mandataire: Cabinet Beaumont

(57) **Abrégé**

La présente description concerne un dispositif (2) comprenant : un bus (BUS) ; des périphériques (Periph1, Periph5, CAR) couplés au bus, les périphériques comprenant un premier circuit (CAR) ; des processeurs (CPU1, CPU2) couplés au bus et initiant des accès aux périphériques comprenant chacun une phase d'adresse suivie d'une phase de données ; et pour chaque processeur, un deuxième circuit (CID1, CID2) fournissant un identifiant (CID) du processeur sur le bus pendant la phase d'adresse de chaque accès initié par le processeur. A chaque accès en lecture au premier circuit (CAR) initié par l'un des processeurs (CPU1, CPU2), le premier circuit (CAR) mémorise l'identifiant (CID) présent sur le bus (BUS) pendant la phase d'adresse de l'accès, puis fournit l'identifiant mémorisé sur le bus pendant la phase de donnée de l'accès.

## Description

### Domaine technique

La présente description concerne de façon générale les circuits électroniques, et, plus particulièrement les systèmes sur puce (SOC de l'anglais "System On Chip") comprenant plusieurs processeurs.

### Technique antérieure

Des dispositifs, ou systèmes sur puce, comprenant plusieurs processeurs configurés pour exécuter un même jeu d'instructions sont connus. Dans de tels dispositifs, les processeurs sont couplés, par exemple connectés, à un bus pour pouvoir mettre en oeuvre des accès en lecture et/ou en écriture à des périphériques couplés, par exemple connectés, au bus.

Dans certains de ces dispositifs connus, l'accès en lecture et/ou en écriture à chaque périphérique est conditionné par l'identité du processeur ayant initié cet accès. Chaque processeur est alors identifié par un identifiant unique et différent des identifiants des autres processeurs. Pour cela, chaque processeur est associé à un circuit d'identification qui, à chaque fois que le processeur initie un accès à un périphérique via le bus, véhicule ou fournit l'identifiant du processeur sur le bus. De cette façon, lorsqu'un périphérique reçoit une requête d'accès, il vérifie si l'identifiant du processeur ayant initié cet accès correspond à l'identifiant d'un processeur ayant l'autorisation d'accéder à ce périphérique.

De cette façon, il est possible de définir des compartiments dans le dispositif, chaque compartiment comprenant un processeur et l'ensemble des périphériques auxquels le processeur a le droit d'accéder. L'identifiant de chaque processeur, fournit par le circuit d'identification associé à ce processeur, est, par exemple, appelé identifiant de compartiment.

Ces dispositifs compartimentés connus présentent divers inconvénients.

### Résumé de l'invention

Il existe un besoin de pallier tout ou partie des inconvénients des dispositifs compartimentés connus décrits ci-dessus.

Par exemple, il serait souhaitable de disposer d'un dispositif compartimenté du type décrit ci-dessus, dans lequel chaque processeur serait en mesure d'obtenir son identifiant de compartiment.

Un mode de réalisation pallie tout ou partie des inconvénients des dispositifs compartimentés connus décrits ci-dessus.

Un mode de réalisation prévoit un dispositif comprenant :
un bus ;
des périphériques couplés au bus, les périphériques comprenant un premier circuit ;
des processeurs couplés au bus, et configurés pour exécuter un même jeu d'instructions et initier des accès aux périphériques via le bus, chaque accès comprenant une phase d'adresse suivie d'une phase de données ; et
pour chaque processeur, un deuxième circuit associé au processeur et configuré pour fournir un identifiant du processeur sur le bus pendant la phase d'adresse de chaque accès initié par le processeur,
dans lequel le premier circuit est configuré pour, à chaque accès en lecture au premier circuit initié par l'un des processeurs :
   - mémoriser l'identifiant présent sur le bus pendant la phase d'adresse de l'accès ; et
   - fournir l'identifiant mémorisé sur le bus pendant la phase de donnée de l'accès.

Un autre mode de réalisation prévoit un procédé mis en oeuvre dans un dispositif comprenant un bus, des périphériques connectés au bus et comprenant un premier circuit, des processeurs couplés au bus, exécutant un même jeu d'instruction, étant associés chacun à un deuxième circuit et initiant des accès aux périphériques via le bus, chaque accès comprenant une phase d'adresse suivie d'une phase de données, le procédé comprenant :
- initier, avec l'un des processeurs, un accès en lecture au premier circuit ;
- fournir au bus, pendant la phase d'adresse de l'accès et avec le deuxième circuit associé au processeur initiant l'accès, un identifiant du processeur ;
- mémoriser avec le premier circuit l'identifiant présent sur le bus pendant la phase d'adresse de l'accès ;
- fournir au bus, avec le premier circuit, et pendant la phase de données de l'accès, l'identifiant mémorisé.

Selon un mode de réalisation :
les périphériques comprennent une mémoire partagée entre aux moins deux desdits processeurs ; et
un programme défini par une suite d'instructions dudit jeu d'instructions est enregistré dans ladite mémoire et est accessible auxdits au moins deux processeurs.

Selon un mode de réalisation, le programme comprend au moins une portion ayant une exécution conditionnée par l'identifiant du processeur exécutant le programme.

Selon un mode de réalisation, pour chaque accès par l'un des processeurs à l'un des périphériques autre que le premier circuit, le dispositif est configuré pour conditionner l'accès au périphérique sur la base de l'identifiant du processeur ayant initié l'accès.

Selon un mode de réalisation, le premier circuit comprend un registre configuré pour :
mémoriser, pendant la phase d'adresse de chaque accès en lecture au premier circuit, l'identifiant présent sur le bus et correspondant au processeur ayant initié l'accès en lecture ;
fournir au bus, pendant la phase de donnée de chaque accès en lecture au premier circuit, l'identifiant mémorisé lors de la phase d'adresse de cet accès en lecture.

Selon un mode de réalisation, chaque identifiant correspond à un processeur différent.

Selon un mode de réalisation, les accès en lecture et en écriture aux deuxièmes circuits sont impossibles.

Selon un mode de réalisation, le bus est de type AMBA.

Selon un mode de réalisation, l'identifiant de chaque processeur est codé en dur dans le deuxième circuit associé à ce processeur.

Selon un mode de réalisation, le premier circuit est accessible en lecture seulement.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, sous la forme de blocs, un exemple d'un dispositif auquel s'appliquent les modes de réalisation et variantes décrits ;
la figure 2 représente, sous la forme de blocs, un exemple de mode de réalisation d'un dispositif ;
la figure 3 représente, sous la forme d'un organigramme, un exemple de mode de réalisation d'un procédé mis en oeuvre dans le dispositif de la figure 2 ; et
la figure 4 représente, sous la forme de blocs, un exemple d'un mode de réalisation détaillé d'un circuit du dispositif de la figure 2.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

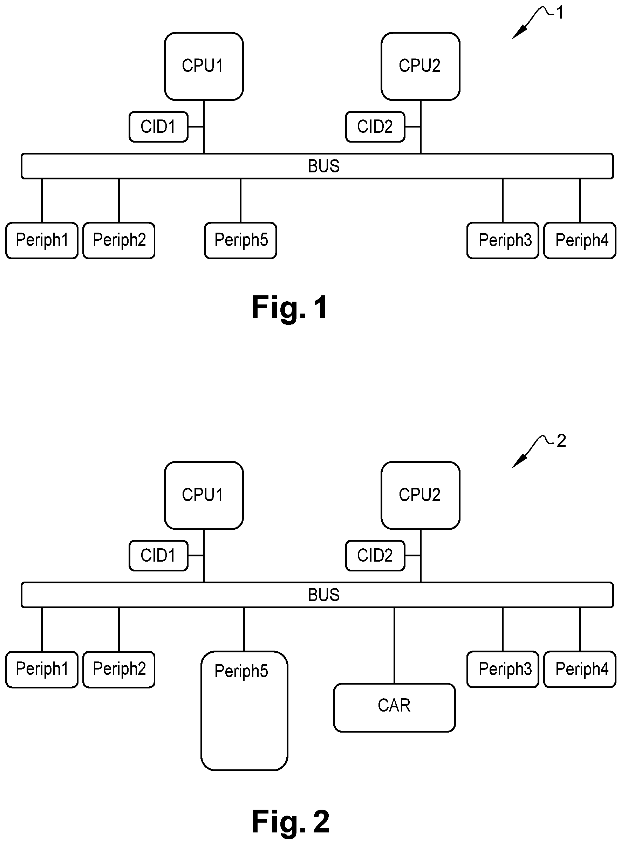

La figure 1 représente, sous la forme de blocs, un exemple d'un dispositif ou système sur puce 1 auquel s'appliquent les modes de réalisation et variantes décrits.

Le dispositif 1 comprend N processeurs CPUi, avec N entier supérieur ou égal à 2, et i un indice entier allant de 1 à N. Dans l'exemple de la figure 1, N est égal à 2 et le dispositif comprend donc deux processeurs CPU1 et CPU2. Les processeurs CPUi sont configurés pour exécuter un même jeu d'instructions. De préférence, les processeurs CPUi sont identiques, bien que cela ne soit pas indispensable dès lors qu'ils peuvent exécuter le même jeu d'instruction.

Le dispositif 1 comprend en outre M périphériques Periphj, avec M un entier strictement positif et j un indice entier allant de 1 à M. Dans l'exemple de la figure 1, M est égal à 5 et le dispositif 1 comprend les périphériques Periph1, Periph2, Periph3, Periph4 et Periph5. A titre d'exemple, l'un des M périphérique, par exemple le périphérique Periph5 dans l'exemple de la figure 1, est une mémoire partagée entre au moins deux des N processeurs.

Le dispositif 1 comprend en outre un bus BUS auquel sont couplés, par exemple connectés, les périphériques Periphj, et auquel sont couplés, par exemple connectés, les processeurs CPUi.

Les processeurs CPUi sont les circuits du dispositif 1 qui sont configurés pour initier des accès en lecture et/ou en écriture à d'autres circuits, par exemple les périphériques Periphj, couplés au bus BUS. Les processeurs CPUi ont alors le rôle de circuits "maîtres". A l'inverse, les périphériques Periphj ne peuvent pas initier d'accès en lecture et/ou en écriture aux autres circuits couplés au bus BUS. Les périphériques Periphj ont alors le rôle de circuit "esclave".

Dans le dispositif 1, les processeurs CPUi sont configurés pour que chaque accès en écriture ou en lecture à un périphérique Periphj initié par un processeur CPUi, via le bus BUS, comprenne deux phases successives. Plus particulièrement, chaque accès en lecture ou en écriture à un périphérique Periphj comprend une première phase, dite phase d'adresse, suivie d'une deuxième phase, dite phase de données.

Par exemple, lors de la phase d'adresse d'un accès, le processeur CPUi ayant initié cet accès fournit sur le bus BUS :
- l'adresse où le CPUi souhaite écrire ou lire des données, donc l'adresse du périphérique Periphj auquel il souhaite accéder ; et
- une indication que l'accès demandé est un accès en lecture ou en écriture.

A titre d'exemple, le bus BUS comprend plusieurs fils conducteurs sur lesquels les bits de l'adresse d'écriture ou de lecture des données sont transmis simultanément, en parallèle, chaque bit d'adresse étant transmis sur un fil conducteur correspondant.

A titre d'exemple, le bus BUS comprend un fil conducteur sur lequel est transmise l'indication que l'accès est un accès en lecture ou un accès en écriture. Par exemple, un bit à un premier état binaire est transmis sur ce conducteur pour indiquer un accès en lecture, et à un deuxième état binaire pour indiquer un accès en écriture.

A titre d'exemple, le bus BUS comprend un fil conducteur sur lequel est disponible un signal d'horloge cadençant les première et deuxième phases de chaque accès.

A titre d'exemple, le bus comprend un fil conducteur sur lequel est transmis un bit indiquant, par un premier état binaire, que des bits de données disponibles sur les conducteurs du bus BUS sont valides et peuvent être lues, et, par un deuxième état binaire, que les bits de données disponibles sur les conducteurs du bus ne sont pas valides.

A titre d'exemple, chaque première phase a une durée d'un cycle du signal d'horloge. A titre d'exemple, dans ce cas, les bits d'adresse, le bit d'indication du type (lecture ou écriture) de l'accès, et, par exemple, le bit indiquant si les bits sur le bus BUS sont valides ou non sont alors transmis simultanément et en parallèle.

Par exemple, lors de la phase de donnée d'un accès, les données qui sont lues ou écrites sont transmises sur le bus. A titre d'exemple, le bus BUS comprend plusieurs fils conducteurs sur lesquels les bits de donnés écrits ou lus sont transmis simultanément, en parallèle, chaque bit de donnée étant transmis sur un fil conducteur correspondant.

A titre d'exemple, le bus BUS est du type AMBA (de l'anglais "Advanced Microcontroller Bus Architecture" - Bus Microcontrôleur à Architecture Avancée).

Le dispositif 1 comprend en outre, pour chaque processeur CPUi, un circuit CIDi associé au processeur CPUi. Ainsi, dans l'exemple de la figure 1, un circuit CID1 est associé au processeur CPU1, et un circuit CID2 est associé au processeur CPU2.

Chaque circuit CIDi comprend l'identifiant de compartiment du processeur auquel il est associé.

A titre d'exemple, dans certaines phases de fonctionnement, par exemple quand des processeurs CPUi sont éteints pour mettre en oeuvre un mode basse consommation, un ou plusieurs identifiants de compartiment d'un ou plusieurs processeurs, par exemple un ou plusieurs processeurs éteints, peuvent être délégués à un autre processeur, par exemple un processeur resté allumé. Ainsi, le processeur CPUi auquel un ou plusieurs identifiants de compartiment d'autres processeurs CPUi ont été délégués peut mettre en oeuvre des fonctions normalement dévolues à ces autres processeurs. Par exemple, un processeur CPUi resté allumé peut mettre en oeuvre des fonctions normalement dévolues à un processeur qui a été éteint, ce qui permet de laisser cet autre processeur éteint. Cette attribution temporaire à un processeur du ou des identifiants de compartiments d'un ou plusieurs autres processeurs est, par exemple, appelée "délégation d'identifiant de compartiment".

A titre d'exemple, dans chaque circuit CIDi, l'identifiant de compartiment du processeur CPUi auquel est associé le circuit CIDi est codé en dur, c'est à dire de manière matérielle.

Par exemple, l'identifiant de compartiment de chaque processeur CPUi est déterminé une fois pour toute lors de la conception du dispositif 1. Dit autrement, cet identifiant ne peut pas être modifié.

De préférence, chaque circuit CIDi n'est ni un périphérique Periphj, ni un processeur CPUi. Par exemple, les circuits CIDi ne peuvent pas initier d'accès en lecture ou en écriture à un périphérique Periphj. En outre, les circuits CIDi ne sont, par exemple, accessibles ni en lecture, ni en écriture.

Chaque circuit CIDi est configuré, à chaque accès (en lecture ou en écriture) à un périphérique Periphj via le bus BUS qui est initié par son processeur CPUi associé, pour fournir sur le bus l'identifiant de compartiment de ce processeur CPUi, lors de la phase de donnée de cet accès. A titre d'exemple, le bus BUS comprend plusieurs fils conducteurs sur lesquels sont transmis des bits correspondant (ou codant) l'identifiant de compartiment du processeur ayant initié l'accès. De cette manière, le bits de l'identifiant de compartiment sont transmis simultanément, en parallèle, chaque bit de l'identifiant de compartiment étant transmis sur un conducteur dédié à cet effet.

Comme cela a déjà été indiqué précédemment, la prévision d'un identifiant de compartiment par processeur CPUi permet de compartimenter le dispositif 1. Dit autrement, cela permet de définir, ou choisir, pour chaque processeur CPUi, à quel(s) périphérique(s) Periphj ce processeur peut accéder.

A titre d'exemple, un périphérique peut être accessible à plusieurs processeurs CPUi. Par exemple, lorsque le périphérique Periph5 est une mémoire, cette mémoire peut être accessible à plusieurs processeurs, par exemple aux deux processeurs CPU1 et CPU2 dans l'exemple de la figure 1, la mémoire étant alors dite "partagée".

Pour mettre en oeuvre ces compartiments dans le dispositif 1, chaque périphérique Periphj est configuré, lorsqu'il reçoit une demande d'accès initié par un processeur CPUi, pendant la phase de donnée de cet accès, pour conditionner cet accès, c'est à dire la mise en oeuvre de l'accès en lecture ou en écriture de données dans le périphérique, à l'identifiant de compartiment du processeur CPUi ayant initié l'accès.

Par exemple, lorsqu'un processeur CPUi initie un accès à un périphérique Periphj, comme le circuit CIDi associé au processeur CPUi fournit au bus BUS, lors de la phase d'adresse de cet accès, l'identifiant de compartiment du processeur CPUi, le périphérique Periphj détermine quel processeur a initié l'accès grâce à l'identifiant de compartiment qu'il lit sur le bus BUS pendant la phase de donnée. Ensuite, le périphérique Periphj compare cet identifiant lu avec le ou les identifiants de compartiment d'une liste comprenant le ou les identifiants de compartiment de tous les processeurs CPUi du dispositif 1 qui ont le droit d'accéder à ce périphérique Periphj. Si l'identifiant de compartiment lu se retrouve dans cette liste, le processeur CPUi ayant initié l'accès a bien le droit d'accéder au périphérique Periphj et l'accès se poursuit avec la phase de données lors de laquelle le périphérique Periphj va fournir des données sur le bus (pour un accès en lecture) ou recevoir des données (pour un accès en écriture).

A titre d'exemple, en figure 1, les périphériques Periph1 et Periph2 sont accessibles seulement par le processeur CPU1, les périphériques Periph3 et Periph4 sont accessibles seulement par le processeur CPU2, et le périphérique Periph5 est accessible par les deux processeurs CPU1 et CPU2. Le dispositif 1 comprend alors deux compartiments.

Un inconvénient du dispositif 1 est que chaque processeur CPUi n'a pas accès à son identifiant de compartiment, ou, dit autrement, n'a pas connaissance de son identifiant.

Pour pallier cet inconvénient, il est proposé d'ajouter un circuit aux périphériques. A chaque accès en lecture à ce circuit, ce circuit mémorise, pendant la phase d'adresse de l'accès, l'identifiant de compartiment du processeur ayant initié l'accès, puis ce circuit fournit au bus, pendant la phase de donnée de l'accès, l'identifiant mémorisé lors de la phase d'adresse.

De préférence, l'identifiant mémorisé fourni sur le bus lors de la phase de donnée de l'accès correspond aux données lues lors de cet accès en lecture. Par exemple, lorsque le bus comprend des fils conducteurs configurés pour transmettre en parallèle, pendant la phase de donnée d'un accès, les bits de la donnée lue ou écrite pendant cet accès, alors l'identifiant mémorisé est transmis, pendant la phase de donnée, sur ces fils conducteurs.

La figure 2 représente, sous la forme de blocs, un exemple de mode de réalisation d'un dispositif 2.

Le dispositif 2 est similaire au dispositif 1 de la figure 1, et seules les différences entre ces deux dispositifs sont ici mises en exergue. Dit autrement, sauf indication contraire, tous ce qui a été indiqué pour le dispositif 1 s'applique au dispositif 2.

Par rapport au dispositif 1, le dispositif 2 comprend, en plus des M périphériques Periphj, un périphérique supplémentaire CAR. Le circuit CAR est couplé, par exemple connecté, au bus BUS.

De préférence, le circuit ou périphérique CAR est accessible en lecture uniquement.

A titre d'exemple, un accès en lecture au périphérique CAR s'effectue de la même façon qu'un accès en lecture à l'un des périphériques Periphj.

A chaque accès en lecture au périphérique CAR initié par l'un des processeur CPUi, le périphérique CAR est configuré pour mémoriser l'identifiant de compartiment du processeur CPUi qui a initié l'accès. Cette mémorisation s'effectue pendant la phase de donnée de l'accès, l'identifiant de compartiment du processeur CPUi ayant initié l'accès étant alors disponible sur le bus BUS. Par exemple, le circuit CAR détecte qu'un processeur a initié un accès en lecture au circuit CAR en comparant son adresse à celle disponible sur le bus BUS pendant la phase d'adresse de l'accès, et en détectant sur le bus BUS que l'accès demandé est un accès en lecture.

En outre, le circuit CAR est configuré, lors de la phase de donnée de cet accès, pour fournir sur le bus BUS l'identifiant mémorisé. Plus particulièrement, le circuit CAR est configuré, lors de cette phase de donnée, pour fournir sur le bus BUS l'identifiant de compartiment de sorte que le processeur CPUi ayant initié l'accès en lecture obtienne son identifiant de compartiment, ou, dit autrement, qu'il puisse lire cet identifiant de compartiment.

Par exemple, l'identifiant de compartiment mémorisé par le circuit CAR pendant la phase d'adresse de l'accès est restitué sur le bus BUS lors de la phase de donnée suivante comme étant la donnée transmise sur le bus.

Par exemple, à chaque fois qu'un processeur CPUi accède de manière valide à un périphérique Periphj, lors de la phase de donnée de l'accès, la donnée à lire ou à écrire correspondant à cet accès transite sur le bus BUS et, dans le cas d'un accès en lecture au périphérique CAR, cette donnée correspond à l'identifiant de compartiment mémorisé par le circuit CAR lors de la phase d'adresse de cet accès en lecture.

De cette façon, lorsqu'un processeur CPUi désire connaître son identifiant de compartiment, il suffit que ce processeur CPUi initie un accès en lecture au circuit CAR, de sorte qu'il reçoive, lors de la phase de donnée de l'accès, son identifiant de compartiment sous la forme de la donnée lue dans le circuit CAR.

Le fait que chaque processeur CPUi du dispositif 1 puisse obtenir son identifiant de compartiment présente de nombreux avantages.

Par exemple, selon un mode de réalisation, l'un des M périphériques Periphj, par exemple le périphérique Periph5, est une mémoire partagée entre au moins deux processeurs du dispositif 2, par exemple entre les processeurs CPU1 et CPU2 dans l'exemple de la figure 2. Il est alors possible de stocker dans la mémoire Periph5 un code de programme d'ordinateur commun à ces deux processeurs, ce programme comprenant des portions dont l'exécution est conditionnée par l'identifiant du processeur exécutant le programme.

Dit autrement, le code comprend une ou plusieurs portions qui ne peuvent (ou doivent) être exécutées chacune que par celui des processeurs CPU1 et CPU2 qui est dévolue à cette portion. Ainsi, lorsqu'un des processeurs CPU1 et CPU2 exécute le code et arrive à une telle portion du code, il n'exécute cette portion de code que si son identifiant de compartiment correspond à l'identifiant de compartiment du processeur ayant le droit d'exécuter cette portion de code. Pour cela, le processeur exécutant le code met en oeuvre un accès en lecture au circuit CAR de sorte à obtenir son identifiant de compartiment, et compare son identifiant de compartiment ainsi obtenu à celui qui conditionne l'exécution de la portion de code. Si les deux identifiants sont identiques, le processeur exécute la portion de code, et, à l'inverse, si les deux identifiants sont différents, le processeur n'exécute pas cette portion de code. Le programme commun à plusieurs processeurs qui est stocké en mémoire partagée est, par exemple, défini par une suite d'instruction du jeu d'instruction commun à ces processeurs.

A titre d'exemple, on appelle "HSR->Attr" l'identifiant de compartiment d'un processeur CPUi que ce processeur CPUi obtient lors d'un accès en lecture au circuit CAR, CPU1_CID l'identifiant de compartiment du processeur CPU1, CPU2_CID l'identifiant de compartiment du processeur CPU2, P un code exécutable par l'un et l'autre des processeurs CPU1 et CPU2, P1 une première portion du code C, et P2 une deuxième portion de ce code P. A titre d'exemple, on considère que le code P a la forme suivante :

```
 if (HSR->Attr == CPU1_CID) {
 P1}
 elsif (HSR->Attr == CPU2_CID) {
 P2}.
```

Lorsque cet exemple de code P est exécuté par le processeur CPU1, ce dernier fait un accès en lecture au circuit CAR lorsqu'il atteint la condition "if (HSR->Attr == CPU1_CID)" et compare ensuite l'identifiant obtenu à l'identifiant CPU1_CID. Comme ces derniers sont égaux, la condition HSR->Attr == CPU1_CID est remplie et le processeur CPU1 exécute la portion de code P1. Puis, lorsque le processeur CPU1 atteint la condition "elsif (HSR->Attr == CPU2_CID)", soit il refait un accès en accès en lecture au circuit CAR s'il n'avait pas mémorisé l'identifiant obtenu lors de l'accès en lecture précédant au circuit CAR, soit il utilise directement l'identifiant obtenu lors de l'accès en lecture précédant au circuit CAR s'il l'avait mémorisé. Le processeur compare alors l'identifiant obtenu grâce à l'accès en lecture au circuit CAR avec l'identifiant CPU2_CID. Comme ces derniers sont différents, la condition HSR->Attr == CPU2_CID n'est pas remplie et le processeur CPU1 n'exécute alors la portion P2. De manière similaire, lorsque le code P est exécuté par le processeur CPU2, celui-ci n'exécute pas la portion P1 mais exécute la portion P2.

Conditionner l'exécution d'une ou plusieurs portions d'un code à l'identifiant de compartiment du processeur CPUi exécutant le code permet que ce code soit commun à plusieurs processeurs CPUi, tout en conservant des portions de code qui ne peuvent être exécutées que par un processeur donné. Il en résulte qu'au lieu de stocker en mémoire un code spécifique pour chaque processeur CPUi, ce qui est stocké en mémoire est un code commun à plusieurs processeurs avec une ou plusieurs spécificités pour au moins l'un de ces processeurs.

Cela permet de réduire la taille de la mémoire Periph5.

Cela permet également, lorsque le code doit être mis à jour pour modifier ou ajouter une fonction ou portion de code spécifique à l'un des processeurs CPUi, que la vérification du code obtenu et son déploiement soient simplifiés.

Bien que l'on ait décrit ci-dessus un exemple d'un code P commun à deux processeurs CPU1 et CPU2, la personne du métier est en mesure de prévoir un code commun à plus de deux processeurs à partir des indications fonctionnelles données ci-dessus.

Par ailleurs, bien que l'on ait décrit ci-dessus un exemple d'un code P commun à plusieurs processeurs CPUi dans lequel le code P comprend une portion spécifique pour chaque processeur CPUi, la personne du métier sera en mesure de prévoir un code commun à plusieurs processeurs comprenant au moins une portion spécifique à un processeur donné, et pouvant ou non comprendre, pour chaque autre processeur partageant ce code, au moins une portion spécifique à ce processeur.

Bien que l'on ait décrit un exemple de code P commun à deux processeurs CPU1 et CPU2 dans lequel la portion P1 ne peut être exécutée que par le processeur CPU1, et la portion P2 ne peut être exécutée que par le processeur CPU2, dans d'autres exemples non illustrés où le dispositif comprend en outre un processeur CPU3, au moins l'une des portions P1 et P2 peut être exécutée par plus d'un processeur. Par exemple, dans ce cas, la portion P1 peut être exécuté par l'un ou l'autre des processeurs CPU1 et CPU3 alors que la portion P2 ne peut être exécutée que par le processeur CPU2.

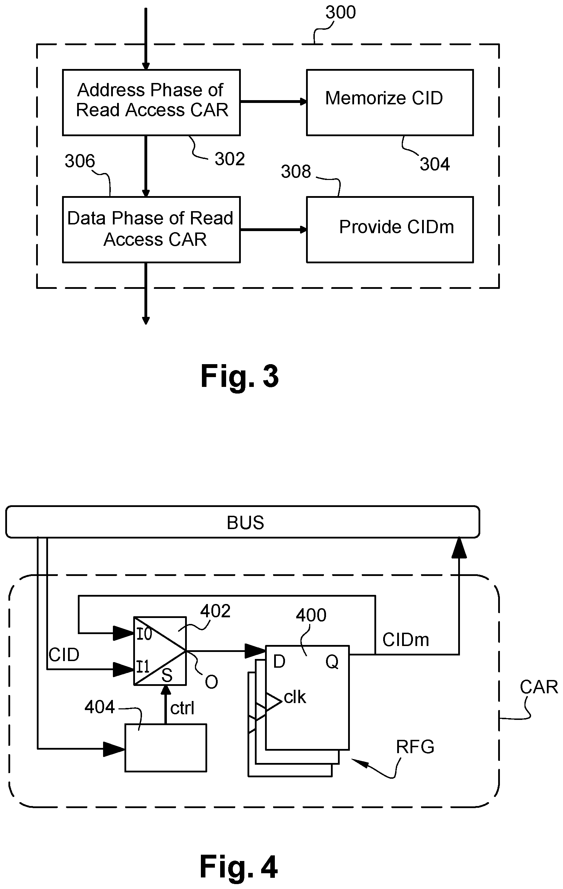

La figure 3 représente, sous la forme d'un organigramme, un exemple de mode de réalisation d'un procédé mis en oeuvre dans le dispositif 2 de la figure 2.

Plus particulièrement, la figure 3 illustre un exemple de mode de réalisation d'un accès en lecture au circuit CAR, l'étape d'accès en lecture au circuit CAR étant référencée 300 en figure 3.

Cette phase 300 d'accès en lecture au circuit CAR comprend d'abord une phase d'adresse 302 (bloc "Address Phase of Read Access CAR"). Pendant cette phase d'adresse 302, le processeur CPUi ayant initié l'accès en lecture fournit au bus BUS l'adresse où une donnée doit être lue. Cette adresse correspond, par exemple, à l'adresse du périphérique CAR ou d'un registre du périphérique CAR. En outre, pendant cette phase d'adresse 302, le circuit CIDi du processeur CPUi ayant initié l'accès fournit au bus BUS l'identifiant de compartiment de ce processeur CPUi.

Pendant la phase 302, à une étape 304 (bloc "Memorize CID"), le circuit CAR mémorise l'identifiant de compartiment présent sur le bus. Par exemple le circuit CAR détecte qu'un processeur CPUi a initié un accès en lecture au circuit CAR grâce à l'adresse et à l'indication que l'accès demandé est un accès en lecture, ces informations étant présentent sur le bus BUS pendant la phase d'adresse 302. A titre d'exemple, l'identifiant de compartiment présent sur le bus BUS pendant la phase d'adresse 302 de l'accès en lecture 300 au circuit CAR est mémorisée dans un registre du circuit CAR.

La phase d'adresse 302 de l'accès en lecture 300 est suivie par la phase de donnée 306 (bloc "Data Phase of Read Access CAR") de cet accès 300.

Pendant la phase de donnée 306, à une étape 308 (bloc "Provide CIDm"), le circuit CAR fournit au bus BUS l'identifiant de compartiment que le circuit CAR a mémorisé à l'étape 304 de la phase d'adresse 302 précédente. L'identifiant de compartiment fourni au BUS correspond alors à la donnée de l'accès en lecture 300, c'est à dire à la donnée qui est lue depuis le circuit CAR par le processeur CPUi ayant initié l'accès 300.

La fin de la phase de donnée 306 marque la fin de l'accès en lecture 300 au circuit CAR.

La figure 4 représente, sous la forme de blocs, un exemple d'un mode de réalisation détaillé du circuit CAR du dispositif 2 de la figure 2.

Le circuit CAR comprend un registre REG. Le registre REG est configuré pour mémoriser, pendant la phase d'adresse de chaque accès en lecture au circuit CAR, l'identifiant du processeur CPUi ayant initié l'accès, cet identifiant étant fourni au bus BUS par le circuit CIDi associé à ce processeur CPUi. Le registre REG est en outre configuré, pendant la phase de donnée de chaque accès en lecture au circuit CAR, pour fournir au bus BUS l'identifiant mémorisé pendant la phase d'adresse précédente.

Par exemple, le registre REG comprend une pluralité de bascules 400 de type D ("D flip-flip" en anglais). Par exemple, chaque bascule 400 comprend une entrée de donnée D configurée pour recevoir un bit, un sortie Q configuré pour fournir un bit mémorisé dans la bascule 400, et une entrée de synchronisation clk configuré pour recevoir un signal de cadencement, par exemple le signal d'horloge du bus BUS. Chaque bascule 400 est alors configuré, à chaque front actif du signal d'horloge reçue sur son entrée clk, pour mémoriser le bit présent sur son entrée D et mettre à jour sa sortie Q en conséquence.

A titre d'exemple, le circuit CAR comprend un circuit de sélection ou de routage 402. Le circuit 402 est configuré pour fournir, à l'entrée de donnée du registre REG, l'identifiant de compartiment CID présent sur le bus BUS lors de la phase d'adresse de chaque accès en lecture au circuit CAR, et l'identifiant de compartiment CIDm mémorisé dans le registre REG sinon.

A titre d'exemple, le circuit 402 comprend une entrée I0, une entrée I1, une entrée de sélection S et une sortie O couplée, de préférence connectée, à l'entrée du registre REG, par exemple aux entrées D des bascules 400. L'entrée I1 du circuit 402 est, par exemple, configurée pour recevoir l'identifiant de compartiment CID présent sur le bus BUS lors de la phase d'adresse de chaque accès en lecture ou en écriture initié par un processeur CPUi, l'entrée I0 du circuit 402 étant par exemple configurée pour recevoir la sortie du registre REG, c'est à dire l'identifiant CIDm mémorisé dans le registre REG. L'entrée S du circuit 402 est, par exemple, configurée pour recevoir un signal binaire de commande ctrl. Lorsque le signal ctrl est dans un premier état binaire, le circuit 402 couple son entrée I1 à sa sortie O, ou, dit autrement, fournit sur sa sortie O l'identifiant CID présent sur son entrée I1, et, lorsque le signal ctrl est dans un deuxième état binaire, le circuit 402 couple son entrée I0 à sa sortie O, ou, dit autrement, fournit sur sa sortie O l'identifiant mémorisé CIDm présent sur son entrée I0. Le signal ctrl est configuré pour être dans son premier état binaire lors de la phase d'adresse de chaque accès en lecture au circuit CAR, et dans son deuxième état binaire sinon.

A titre d'exemple, le circuit CAR comprend un circuit 404 configuré pour fournir le signal ctrl à partir des signaux disponibles sur le bus BUS. Par exemple, le circuit 404 est configuré pour détecter qu'un accès au circuit CAR a été initié par un processeur CPUi à partir de l'adresse présente sur le bus BUS et de l'indication présente sur le BUS qu'un accès en lecture est demandé.

La personne du métier est en mesure de prévoir d'autres exemples de mise en oeuvre du circuit CAR à partir des indications fonctionnelles données ci-dessus. Par exemple, le circuit 402 peut être omis. Dans un tel exemple, l'entrée de donnée du registre REG reçoit alors directement l'identifiant de compartiment CID présent sur le bus BUS, et le registre REG, par exemple chacune des bascules 400, comprend en outre une entrée d'activation recevant le signal ctrl et étant configuré pour permettre la mise à jour du registre REG uniquement lors des fronts actifs du signal d'horloge du bus BUS alors que le signal ctrl est a son premier état binaire, et pour ne pas modifier, ou mettre à jour, le registre REG si le signal ctrl est à son deuxième état binaire.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus.

## Revendications

1. Dispositif (2) comprenant :
un bus (BUS) ;
des périphériques (Periph1, Periph5, CAR) couplés au bus, les périphériques comprenant un premier circuit (CAR) ;
des processeurs (CPU1, CPU2) couplés au bus, et configurés pour exécuter un même jeu d'instructions et initier des accès aux périphériques via le bus, chaque accès comprenant une phase d'adresse suivie d'une phase de données ; et
pour chaque processeur, un deuxième circuit (CID1, CID2) associé au processeur et configuré pour fournir un identifiant (CID) du processeur sur le bus pendant la phase d'adresse de chaque accès initié par le processeur,
dans lequel le premier circuit (CAR) est configuré pour, à chaque accès en lecture (300) au premier circuit (CAR) initié par l'un des processeurs (CPU1, CPU2) :
- mémoriser (304) l'identifiant (CID) présent sur le bus (BUS) pendant la phase d'adresse (302) de l'accès (300) ; et
- fournir (308) l'identifiant mémorisé (CIDm) sur le bus (BUS) pendant la phase de donnée (306) de l'accès (300).

2. Procédé mis en oeuvre dans un dispositif (2) comprenant un bus (BUS), des périphériques (Periph1, Periph5, CAR) connectés au bus et comprenant un premier circuit (CAR), des processeurs (CPU1, CPU2) couplés au bus, exécutant un même jeu d'instruction, étant associés chacun à un deuxième circuit (CID1, CID2) et initiant des accès aux périphériques via le bus, chaque accès comprenant une phase d'adresse suivie d'une phase de données, le procédé comprenant :
- initier, avec l'un des processeurs, un accès en lecture (300) au premier circuit (CAR) ;
- fournir au bus (BUS), pendant la phase d'adresse (302) de l'accès (300) et avec le deuxième circuit (CID1, CID2) associé au processeur (CPU1, CPU2) initiant l'accès, un identifiant (CID) du processeur ;
- mémoriser (304) avec le premier circuit (CAR) l'identifiant (CID) présent sur le bus (BUS) pendant la phase d'adresse (302) de l'accès (300) ;
- fournir (308) au bus (BUS), avec le premier circuit (CAR), et pendant la phase de données (306) de l'accès (300), l'identifiant mémorisé (CIDm).

3. Dispositif selon la revendication 1 ou procédé selon la revendication 2, dans lequel :
les périphériques comprennent une mémoire (Periph5) partagée entre aux moins deux desdits processeurs (CPU1, CPU2) ; et
un programme défini par une suite d'instructions dudit jeu d'instructions est enregistré dans ladite mémoire et est accessible auxdits au moins deux processeurs (CPU1, CPU2).

4. Dispositif ou procédé selon la revendication 3, dans lequel le programme comprend au moins une portion ayant une exécution conditionnée par l'identifiant (CID) du processeur (CPU1, CPU2) exécutant le programme.

5. Dispositif selon l'une quelconque des revendications 1, 3 et 4, ou procédé selon l'une quelconque des revendications 2 à 4, dans lequel, pour chaque accès par l'un des processeurs (CPU1, CPU2) à l'un des périphériques autre que le premier circuit (CAR), le dispositif (2) est configuré pour conditionner l'accès au périphérique sur la base de l'identifiant (CID) du processeur (CPU1, CPU2) ayant initié l'accès.

6. Dispositif selon l'une quelconque des revendications 1 et 3 à 5, ou procédé selon l'une quelconque des revendications 2 à 5, dans lequel le premier circuit (CAR) comprend un registre (REG) configuré pour :
mémoriser (304), pendant la phase d'adresse (302) de chaque accès en lecture (300) au premier circuit, l'identifiant (CID) présent sur le bus (BUS) et correspondant au processeur ayant initié l'accès en lecture ;
fournir (308) au bus (BUS), pendant la phase de donnée (306) de chaque accès en lecture (300) au premier circuit (CAR), l'identifiant mémorisé (CIDm) lors de la phase d'adresse (302) de cet accès en lecture (300).

7. Dispositif selon l'une quelconque des revendications 1 et 3 à 6, ou procédé selon l'une quelconque des revendications 2 à 6, dans lequel chaque identifiant (CID) correspond à un processeur (CPU1, CPU2) différent.

8. Dispositif selon l'une quelconque des revendications 1 et 3 à 7, ou procédé selon l'une quelconque des revendications 2 à 7, dans lequel les accès en lecture et en écriture aux deuxièmes circuits (CID1, CID2) sont impossibles.

9. Dispositif selon l'une quelconque des revendications 1 et 3 à 8, ou procédé selon l'une quelconque des revendications 2 à 8, dans lequel le bus (BUS) est de type AMBA.

10. Dispositif selon l'une quelconque des revendications 1 et 3 à 9, ou procédé selon l'une quelconque des revendications 2 à 9, dans lequel l'identifiant (CID) de chaque processeur (CPU1, CPU2) est codé en dur dans le deuxième circuit (CID1, CID2) associé à ce processeur.

11. Dispositif selon l'une quelconque des revendications 1 et 3 à 10, ou procédé selon l'une quelconque des revendications 2 à 10, dans lequel le premier circuit (CAR) est accessible en lecture seulement.
